# EUROPEAN PATENT SPECIFICATION

(11) **EP 1 610 223 B1**
(45) Date of publication and mention of the grant of the patent: **20.02.2008**
(21) Application number: 05105452.6
(22) Date of filing: 21.06.2005
(51) Int. Cl.: G06F 12/14, G11B 20/00, H04Q 7/32

(54) **System for downloading contents data, method and mobile communication terminal used for the same**
System zum Herunterladen von Inhaltsdaten, Verfahren und Mobilkommunikationsendgerät dafür
Système pour télécharger des données contenues, procédé et terminal mobile de communication utilisé à cet effet

(30) Priority: 23.06.2004 JP 2004184370
(43) Date of publication of application: 28.12.2005
(62) Divisional of application: 05110883.5
(73) Proprietor: NEC CORPORATION, Tokyo (JP)
(72) Inventor: YAMAMOTO, Hikaru, Tokyo (JP)
(74) Representative: Betten & Resch

(56) References cited:
- EP-A- 1 320 272
- US-A1- 2002 165 008
- US-A1- 2003 007 640

## Description

### BACKGROUND OF THE INVENTION

### Field of the Invention

The present invention relates to a contents data utilization system and method, and a mobile communication terminal used for the same, and more particularly to a contents data utilization system in which the contents data is downloaded from a contents server to the mobile communication terminal via a radio network and to be utilized.

### Description of the Prior Art

As an example of such contents data utilization system, a technique is disclosed in Japanese Patent Application Laid-Open No. 2003-110541 (patent document 1). This technique will be described below. When a contents acquisition request including a subscriber number are transmitted from a mobile communication terminal to a contents server (hereinafter simply referred to as a server), the server generates a cipher key of contents based on the received subscriber number, and encodes the contents data with this key. And the encoded contents data is downloaded to the mobile communication terminal, together with the cipher key.

At the mobile communication terminal, the encoded contents data and the cipher key are received, and associatively stored in memory. Thereafter, at the mobile communication terminal, to utilize the contents, the contents data is decoded using the cipher key.

In US-A-2003/0007640, a digital work protection system for recording and playing back digital work is disclosed which comprises a portable recording medium device including a storage area and being attached to a record/playback device and the record/playback device. The record /playback device encrypts content based on a device unique information that is unique to the record/playback device to generate the encrypted information, and records the generated encrypted information onto the recording medium device. In order to play back the content, the record/playback device decrypts the encrypted information based on the device unique information stored in the record/playback device. There is an effect that the encrypted information stored in the recording medium device is neither decrypted nor played back by any other device than the record/playback device having the unique information stored therein.

In EP-A-1 320 272, a mobile communication terminal is disclosed to which an external storage medium storing subscriber information can be arbitrarily attached and which can carry out communication as a terminal of a subscriber corresponding to the subscriber information stored in the attached external memory medium. The mobile communication terminal comprises an encryption section encrypting arbitrary information based on specific information stored in an external storage medium. When information is to be stored in the storage section other than the external storage medium, a storage control section causes the encryption section to encrypt the information and the storage section to store the encrypted information.

### BRIEF SUMMARY OF THE INVENTION

With the above technique as disclosed in patent document 1, at the mobile communication terminal, the contents encoded by the cipher key based on the subscriber number and the cipher key are associated and stored in an internal memory or an external storage.

Accordingly, when the contents owned by the person himself who purchased the fee-charging contents data are desired to be shared between a plurality of mobile communication terminals, the external memory may be employed to share the contents. However, when the external memory storing the fee-charging contents data is lost, the contents data may be decoded and reproduced due to insufficient secrecy, going against the copyright protection, because this external memory associatively stores the cipher key and the contents data encrypted by the cipher key.

Also, since besides the encoded contents data, the cipher key is downloaded from the contents server to the mobile communication terminal, there is a drawback that the communication time and communication fee are correspondingly increased to impose a more burden on the user. Also, when the same user wants to share the contents between a plurality of mobile communication terminals, there is a drawback that the contents can not be shared, because the subscriber number is different for every terminal.

It is an object of the present invention to provide a contents data utilization system and method, and a mobile communication terminal, in which the contents data is shared between a plurality of mobile communication terminals while the copyright is protected.

The present invention provides a contents data utilization system for downloading contents data via a communication network to store the contents data into an external memory of a mobile communication terminal as defined in claim 1.

Also, the invention provides a contents data utilization method of downloading contents data via a communication network to store the contents data into an external memory of a mobile communication terminal as defined in claim 2.

Also, the invention provides a mobile communication terminal which downloads contents data via a communication network to store the contents data into an external memory thereof as defined in claim 3.

Also, the invention provides a program as defined in claim 4.

### BRIEF DESCRIPTION OF THE DRAWINGS

FIG. 1 is a system concept diagram of the present invention;
FIG. 2 is a functional block diagram of a mobile communication terminal according to an embodiment of the invention;
FIG. 3 is a flowchart showing an operation of storing the contents according to the embodiment of the invention;
FIG. 4 is a flowchart showing an operation of reproducing the contents according to the embodiment of the invention; and
FIG. 5 is a flowchart showing another operation of reproducing the contents according to the embodiment of the invention.

### DETAILED DESCRIPTION OF THE PREFERRED EMBODIMENTS

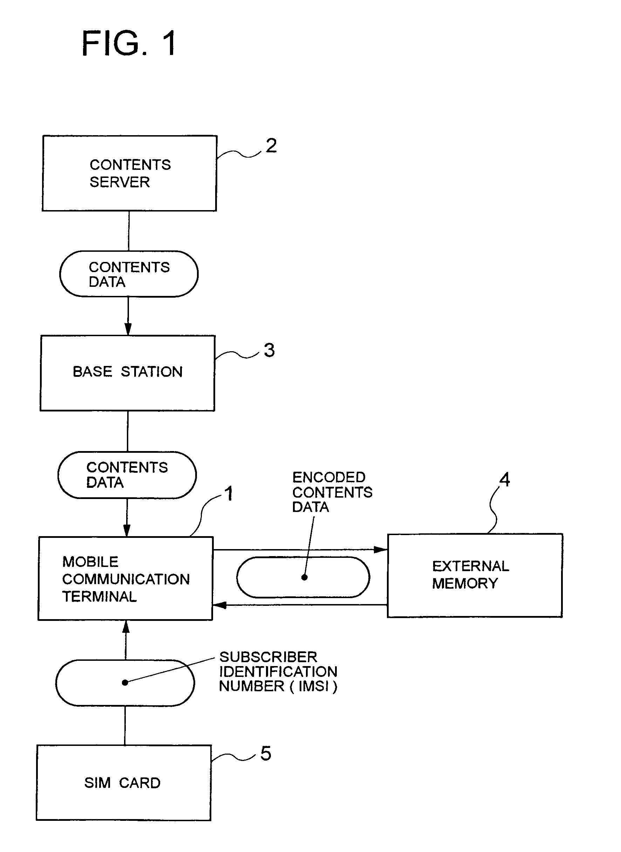

The preferred embodiments of the present invention will be described below with reference to the drawings. FIG. 1 is a block diagram showing a system configuration of the invention. In FIG. 1, a mobile communication terminal 1 receives the contents data from a contents server 2 via a base station 3. At this time, the mobile communication terminal 1 encodes the received contents data and stores the encoded data in an external memory 4, in which a cipher key may be created based on an IMSI (International Mobile Subscriber Identity) that is a subscriber identification number read from a removable SIM (Subscriber Identity Module) card 5 inserted into the mobile communication terminal 1. Accordingly, this cipher key is intrinsic to the IMSI.

The contents data stored in the external memory 4 is decoded in the mobile communication terminal 1. That is, the decoding is made by regenerating the cipher key, which is generated in encoding, by utilizing the subscriber identification number (IMSI) read from the SIM card 5 inserted into the mobile communication terminal 1. The reproduction of the contents data at the mobile communication terminal 1 is allowed only when the cipher key in encoding is matched with the cipher key generated for decoding.

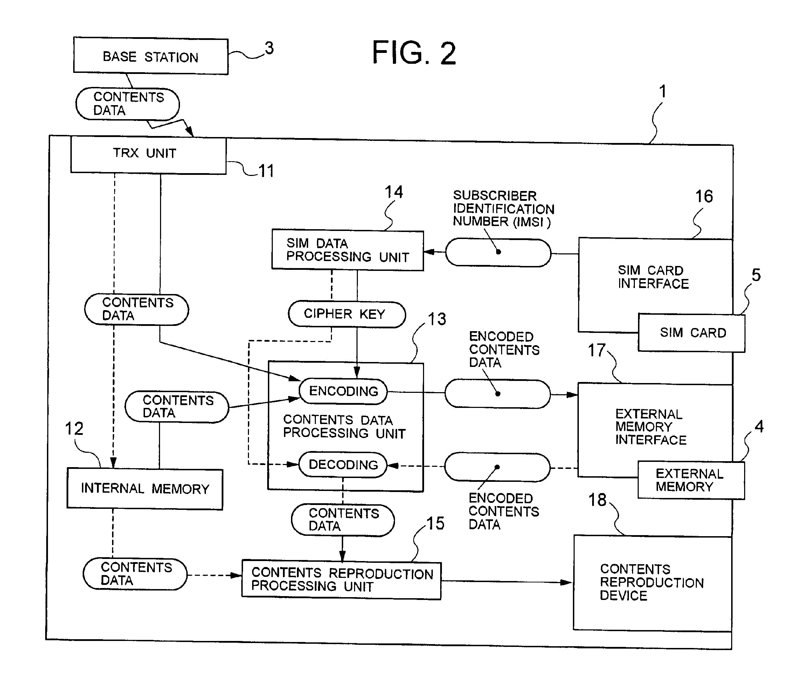

FIG. 2 is a functional block diagram of the mobile communication terminal 1 of FIG. 1. In FIG. 2, a TRX (transmitting and receiving) unit 11 receives the contents data from the server 1 via the base station 3 (see FIG. 1). The received contents data is supplied to a contents data processing unit 13. At this time, an SIM data processing unit 14 reads the subscriber identification number (IMSI) from the SIM card 5 inserted into an SIM card interface 16. The SIM data processing unit 14 converts the read subscriber identification number into a cipher key for encoding the contents data, and transmits it to the contents data processing unit 13. This cipher key is an intrinsic value to the subscriber identification number (IMSI).

The contents data processing unit 13 encodes the contents data for the mobile communication terminal 1, using the received contents data and the cipher key, transfers the encoded data to the external memory 4 inserted into an external memory interface 17, and stores it therein. Of course, the contents data once stored in an internal memory 12 may be also stored in the external memory 4. In this case, after completion of transferring the contents data to the external memory 4, it is assumed that the contents data stored in the internal memory 12 is immediately deleted.

Upon utilization of the contents data, the contents data stored in the external memory 4 is transferred to the contents data processing unit 13. At this time, the SIM data processing unit 14 reads the subscriber identification number (IMSI) from the SIM card 5 inserted into the SIM card interface 16. The SIM data processing unit 14 regenerates the cipher key in encoding the contents data from the read subscriber identification number and transmits it to the contents data processing unit 13. The contents data processing unit 13 decodes the contents data for the mobile communication terminal 1, using the received contents data and the cipher key, and transfers it to a contents reproduction processing unit 15. The contents reproduction processing unit 15 reproduces the contents data by driving a contents reproduction device 18 such as an LCD and/or a speaker.

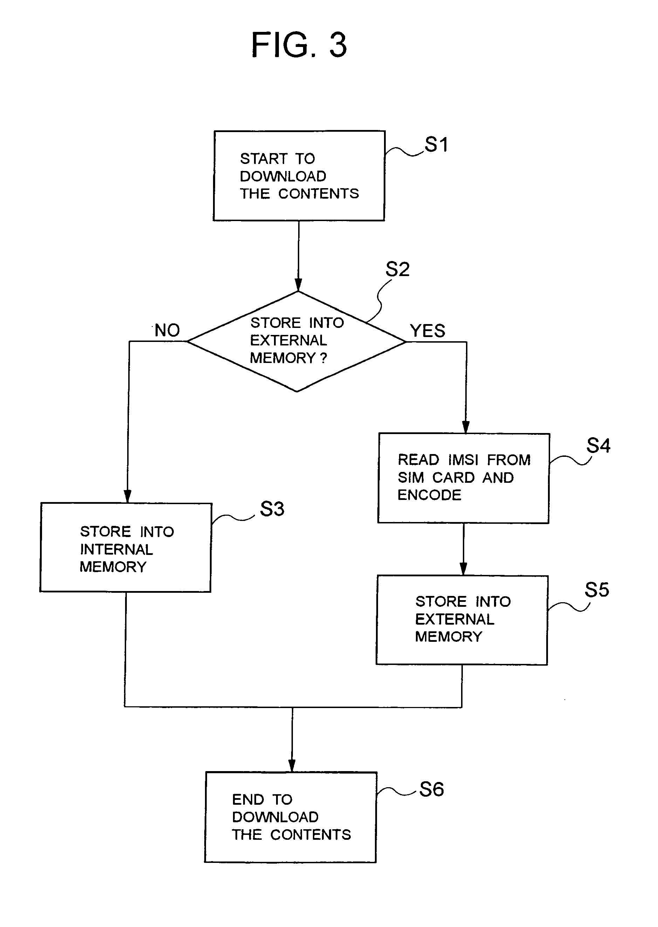

FIG. 3 is a flowchart showing an operation of downloading the data according to one embodiment of the invention. If the mobile communication terminal starts to download the contents data (step S1), the user is prompted to select a storing destination of downloaded data. If the storing destination is designated as the internal memory by a key operation of the user ("No" at step S2), the data is not encoded but stored in the internal memory (step S3).

At step S2, if the storing destination is designated as the external memory, the subscriber identification number (IMSI) is read from the SIM card 5, the cipher key is generated, and the contents data is encoded using this cipher key (step S4). Then, the encoded data is stored in the external memory 4 (step S5). Thus, download of the contents is completed (step S6).

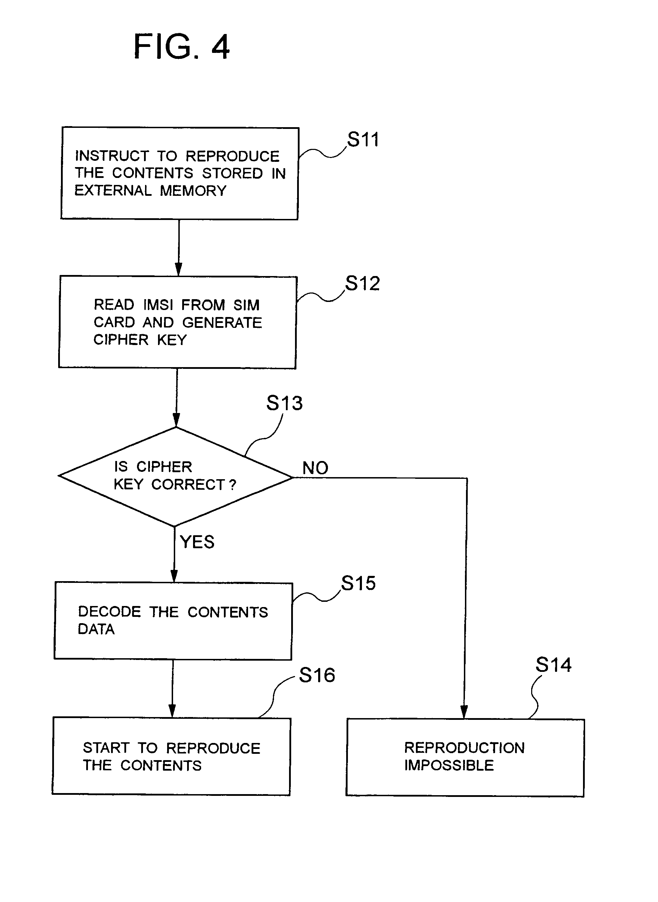

FIG. 4 is a flowchart showing an operation of reproducing the data according to the embodiment of the invention. If the user instructs the mobile communication terminal 1 to reproduce the contents data stored in the external memory 4 (step S11), a cipher key is generated by reading the subscriber identification number (IMSI) from the SIM card 5 (step S12), and the data is decoded using the cipher key. At this time, if the cipher key is judged to be incorrect ("No" at step S13), data is not reproduced (step S14). If the cipher key is correct at step S13, the contents data is decoded using the cipher key (step S15), and the reproduction is started (step S16).

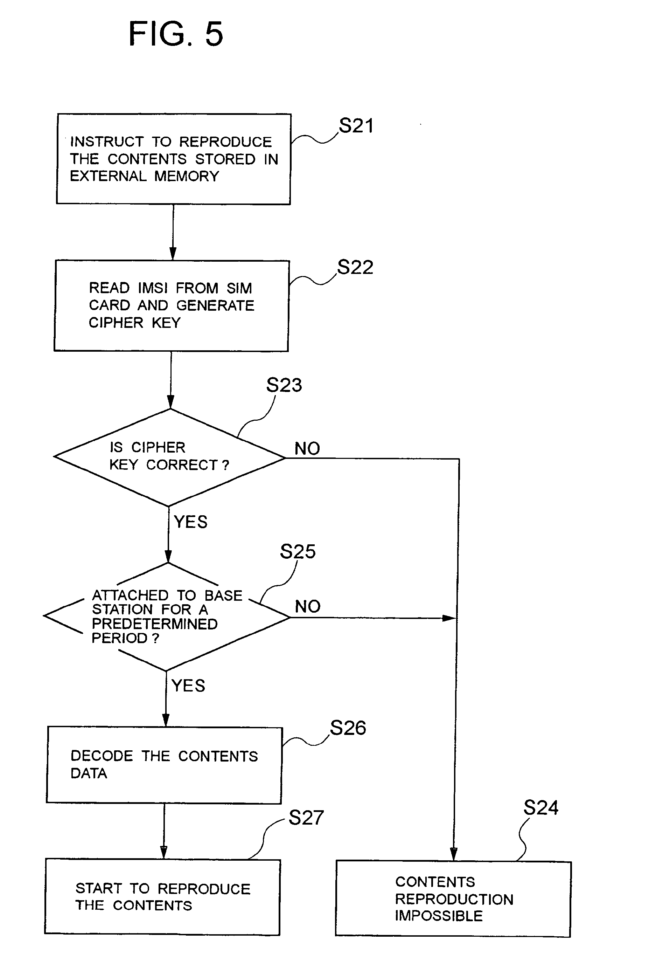

FIG. 5 is a flowchart showing an operation of reproducing the data according to another embodiment of the invention. If the user instructs the mobile communication terminal 1 to reproduce the contents data stored in the external memory 4 (step S21), a cipher key is generated by reading the subscriber identification number (IMSI) from the SIM card 5 (step S22). If the cipher key is incorrect ("No" at step S23), the contents data is not reproduced (step S24). If the cipher key is correct at step S23, an attaching history indicating whether or not the mobile communication terminal 1 attaches (connects) to the base station 3 for a predetermined (preset) period, is checked (step S25).

It is supposed that this attaching history is stored via the TRX11 in the internal memory 12. If there is no record in which the mobile communication terminal 1 is attached to the base station 3 for the predetermined period, the contents data is not reproduced (step S24). At step S25, if there is any attaching record for the predetermined period, the contents data is decoded using the generated cipher key (step S26), and reproduction of the contents is started (step S27). At this time, a determination whether or not there is attaching record is performed in the contents data processing unit 13.

In this way, the attaching history to the base station 3 for the predetermined period is checked, and a determination whether or not the contents are reproduced is made according to the checked result, whereby the users for utilizing the contents are only limited to those of the mobile communication terminal 1. Since a determination whether or not the contents are utilized is made only based on the subscriber identification number (IMSI) and the attaching history, the base station or server is subject to no excess load.

In this embodiment, in the case where the external memory and the SIM card are passed to another mobile communication terminal, it is required that the battery is dismounted when replacing the SIM card, and the power is turned on again. Since the mobile communication terminal is necessarily attached to the base station when turning on the power, the attaching history is created instantly, and stored in the internal memory, as far as the mobile communication terminal is within a communication area of the base station. Therefore, the contents can be shared with other mobile communication terminals.

In a further embodiment not claimed by the present invention, the cipher key may be generated using the fingerprint intrinsic to the user, instead of the cipher key based on the IMSI in the previous embodiment. That is, the information of the fingerprint is converted into digital data, and in accordance with a predetermined cipher key generation algorithm, the cipher key is generated based on this digital data. In this further embodiment, the SIM card interface 16 of FIG. 2 is a fingerprint reading unit, and the SIM data processing unit 14 of FIG. 2 is a cipher key generation unit with the cipher key generation algorithm.

In this way, the personal use of the contents data is limited, as far as the same user and the same cipher key generation algorithm are involved, whereby the contents can be shared between a plurality of mobile communication terminals while the copyright is protected. It is apparent that not only the fingerprint but also the biological (living organism) information capable of identifying the person can be employed. Also, it is apparent that in each of the above embodiments the operation procedure may be stored in advance as a program in the ROM, and read and executed by the CPU (computer).

According to the invention, since the contents data is encoded using the subscriber identification number (IMSI), the contents can be shared between a plurality of mobile communication terminals while the copyright is protected, giving rise to the effect that there is less possibility that the contents are employed without permission by others when stolen or lost.

Also, according to the invention, since the contents data is stored in the external memory, large amounts of data can be stored by exchanging the external memory, giving rise to the effect that the contents can be easily backed up against failure, loss or theft.

An embodiment of the present invention may be summarized as providing a contents data utilization system in which the contents data is shared between a plurality of mobile communication terminals while the copyright is protected. When the contents data downloaded via a communication network is stored into an external memory of a mobile communication terminal, an SIM data processing unit generates a cipher key, using an IMSI that is an identifier stored in an SIM card inserted into the terminal 1. Using the cipher key, a contents data processing unit encodes the downloaded contents data, and stores it into an external memory. When the contents data is reproduced, the SIM data processing unit generates a cipher key, using the identifier stored in the SIM card, and decodes and reproduces the contents data stored in the external memory. Thereby, the contents data can be shared between a plurality of mobile communication terminals owned by the user having the SIM card.

## Claims

1. A contents data utilization system for downloading contents data via a communication network to store the contents data into an external memory (4) of a mobile communication terminal (1), comprising:
a card (5), which is removably inserted into said mobile communication terminal (1), for storing an identifier intrinsic to the user of said mobile communication terminal (1);
at said mobile communication terminal (1),
means for generating a cipher key using the identifier stored in said card (5) in response to a download command;
means for encoding said contents data with said cipher key and storing the encoded data into said external memory (4),
means for generating a cipher key using the identifier stored in said card (5) in response to a contents reproduction command;
**characterized in that**
said mobile communication terminal (1) further comprises:
means for storing an attaching history indicating whether or not the mobile communication terminal (1) connects to said communication network; and
means for decoding and reproducing said contents data stored in said external memory (4) using said ciphar key in accordance with said attaching history in response to said contents reproduction command.

2. A contents data utilization method of downloading contents data via a communication network to store the contents data into an external memory (4) of a mobile communication terminal (1), comprising:
at said mobile communication terminal (1),
a step of generating a cipher key using an identifier intrinsic to the user of said mobile communication terminal (1) stored in a removable card (5) in response to a download command;
a step of encoding said contents data with said cipher key and storing the encoded data into said external memory (4),
a step of generating a cipher key using the identifier stored in said card (5) in response to a contents reproduction command;
**characterized by**
further comprising, at said mobile communication terminal (1), a step of storing an attaching history indicating whether or not the mobile communication terminal (1) connects to said communication network, and a step of decoding and reproducing said contents data stored in said external memory (4) using said cipher key in accordance with said attaching history in response to said contents reproduction command.

3. A mobile communication terminal (1) for downloading contents data via a communication network to store the contents data into an external memory (4) thereof, comprising:
means for generating a cipher key using an identifier intrinsic to the user of said mobile communication terminal (1) stored in a removable card (5) in response to a download command;
means for encoding said contents data with said cipher key and storing the encoded data into said external memory (4);
means for generating a cipher key using the identifier stored in said card (5) in response to a contents reproduction command;
**characterized by**
further comprising means for storing an attaching history indicating whether or not the mobile communication terminal (1) connects to said communication network, and
means for decoding and reproducing said contents data stored in said external memory (4) using said cipher key in accordance with said attaching history in response to said contents reproduction command.

4. A program having code means for causing a computer when executing said program to carry out the steps of the method according to claim 2.

## Patentansprüche

1. Inhaltsdatennutzungssystem zum Herunterladen von Inhaltsdaten über ein Kommunikationsnetzwerk, um die Inhaltsdaten in einen externen Speicher (4) eines mobilen Kommunikationsendgeräts (1) zu speichern, umfassend:
eine Karte (5), die entfernbar in das mobile Kommunikationsendgerät (1) eingefügt ist, zum Speichern eines Identifizierers, der dem Anwender des mobilen Kommunikationsendgeräts (1) eigen ist;
beim mobilen Kommunikationsendgerät (1):
eine Einrichtung zum Erzeugen eines Verschlüsselungsschlüssels unter Verwendung des in der Karte (5) gespeicherten Identifizierers in Reaktion auf einen Herunterladebefehl,
eine Einrichtung zum Codieren der Inhaltsdaten mit dem Verschlüsselungsschlüssel und zum Speichern der codierten Daten in den externen Speicher (4),
eine Einrichtung zum Erzeugen eines Verschlüsselungsschlüssels unter Verwendung des in der Karte (5) gespeicherten Identifizierers in Reaktion auf einen Inhaltswiedergabebefehl;
**dadurch gekennzeichnet, dass**
das mobile Kommunikationsendgerät (1) weiterhin Folgendes aufweist:
eine Einrichtung zum Speichern einer Anschlusshistorie, die anzeigt, ob sich das mobile Kommunikationsendgerät (1) mit dem Kommunikationsnetzwerk verbindet oder nicht; und
eine Einrichtung zum Decodieren und Wiedergeben der Inhaltsdaten, die im externen Speicher (4) gespeichert sind, unter Verwendung des Verschlüsselungsschlüssels gemäß der Anschlusshistorie in Reaktion auf den Inhaltswiedergabebefehl.

2. Inhaltsdatennutzungsverfahren zum Herunterladen von Inhaltsdaten über ein Kommunikationsnetzwerk, um die Inhaltsdaten in einen externen Speicher (4) eines mobilen Kommunikationsendgeräts (1) zu speichern; umfassend:
beim mobilen Kommunikationsendgerät (1):
einen Schritt zum Erzeugen eines Verschlüsselungsschlüssels unter Verwendung eines dem Anwender des mobilen Kommunikationsendgeräts (1) eigenen Identifizierers, der in einer entfernbaren Karte (5) gespeichert ist, in Reaktion auf einen Herunterladebefehl;
einen Schritt zum Codieren der Inhaltsdaten mit dem Verschlüsselungsschlüssel und zum Speichern der codierten Daten in den externen Speicher (4);
einen Schritt zum Erzeugen eines Verschlüsselungsschlüssels unter Verwendung des in der Karte (5) gespeicherten Identifizierers in Reaktion auf einen Inhaltswiedergabebefehl;
**dadurch gekennzeichnet, dass**
es beim mobilen Kommunikationsendgerät (1) weiterhin einen Schritt zum Speichern einer Anschlusshistorie aufweist, die anzeigt, ob sich das mobile Kommunikationsendgerät (1) mit dem Kommunikationsnetzwerk verbindet oder nicht, und einen Schritt zum Decodieren und Wiedergeben der Inhaltsdaten, die im externen Speicher (4) gespeichert sind, unter Verwendung des Verschlüsselungsschlüssels gemäß der Anschlusshistorie in Reaktion auf den Inhaltswiedergabebefehl.

3. Mobiles Kommunikationsendgerät (1) zum Herunterladen von Inhaltsdaten über ein Kommunikationsnetzwerk, um die Inhaltsdaten in seinen externen Speicher (4) zu speichern, umfassend:
eine Einrichtung zum Erzeugen eines Verschlüsselungsschlüssels unter Verwendung eines dem Anwender des mobilen Kommunikationsendgeräts (1) eigenen Identifizierers, der in einer entfernbaren Karte (5) gespeichert ist, in Reaktion auf einen Herunterladebefehl;
eine Einrichtung zum Codieren der Inhaltsdaten mit dem Verschlüsselungsschlüssel und zum Speichern der codierten Daten in den externen Speicher (4);
eine Einrichtung zum Erzeugen eines Verschlüsselungsschlüssels unter Verwendung des in der Karte (5) gespeicherten Identifizierers in Reaktion auf einen Inhaltswiedergabebefehl;
**dadurch gekennzeichnet, dass**
es weiterhin eine Einrichtung zum Speichern einer Anschlusshistorie aufweist, die anzeigt, ob sich das mobile Kommunikationsendgerät (1) mit dem Kommunikationsnetzwerk verbindet oder nicht; und
eine Einrichtung zum Decodieren und Wiedergeben der Inhaltsdaten, die im externen Speicher (4) gespeichert sind, unter Verwendung des Verschlüsselungsschlüssels gemäß der Anschlusshistorie in Reaktion auf den Inhaltswiedergabebefehl.

4. Programm mit einer Codeeinrichtung zum Veranlassen, dass ein Computer dann, wenn er das Programm ausführt, die Schritte des Verfahrens nach Anspruch 2 ausführt.

## Revendications

1. Système d'utilisation de données de contenu pour télécharger des données de contenu via un réseau de communication afin de mémoriser les données de contenu dans une mémoire externe (4) d'un terminal de communication mobile (1), comprenant :
une carte (5), qui est insérée de manière amovible dans ledit terminal de communication mobile (1), pour mémoriser un identificateur propre à l'utilisateur dudit terminal de communication mobile (1) ;
au niveau dudit terminal de communication mobile (1),
des moyens pour générer une clé de chiffrement en utilisant l'identificateur mémorisé dans ladite carte (5) en réponse à une commande de téléchargement ;
des moyens pour coder lesdites données de contenu avec ladite clé de chiffrement et mémoriser les données codées dans ladite mémoire externe (4);
des moyens pour générer une clé de chiffrement en utilisant l'identificateur mémorisé dans ladite carte (5) en réponse à une commande de reproduction de contenu ;
**caractérisé en ce que**
ledit terminal de communication mobile (1) comprend en outre :
des moyens pour mémoriser un historique de connexion indiquant si, oui ou non, le terminal de communication mobile (1) se connecte audit réseau de communication ; et
des moyens pour décoder et reproduire lesdites données de contenu mémorisées dans ladite mémoire externe (4) en utilisant ladite clé de chiffrement conformément audit historique de connexion en réponse à ladite commande de reproduction de contenu.

2. Procédé d'utilisation de données de contenu pour télécharger des données de contenu via un réseau de communication afin de mémoriser les données de contenu dans une mémoire externe (4) d'un terminal de communication mobile (1), comprenant :
au niveau dudit terminal de communication mobile (1),
une étape consistant à générer une clé de chiffrement en utilisant un identificateur propre à l'utilisateur dudit terminal de communication mobile (1) mémorisé dans une carte (5) amovible en réponse à une commande de téléchargement ;
une étape consistant à coder lesdites données de contenu avec ladite clé de chiffrement et mémoriser les données codées dans ladite mémoire externe (4) ;
une étape consistant à générer une clé de chiffrement en utilisant l'identificateur mémorisé dans ladite carte (5) en réponse à une commande de reproduction de contenu ;
**caractérisé en ce qu'**il comprend en outre:
au niveau dudit terminal de communication mobile (1), une étape consistant à mémoriser un historique de connexion indiquant si, oui ou non, le terminal de communication mobile (1) se connecte audit réseau de communication, et une étape consistant à décoder et reproduire lesdites données de contenu mémorisées dans ladite mémoire externe (4) en utilisant ladite clé de chiffrement conformément audit historique de connexion en réponse à ladite commande de reproduction de contenu.

3. Terminal de communication mobile (1) pour télécharger des données de contenu via un réseau de communication afin de mémoriser les données de contenu dans une mémoire externe (4) de celui-ci, comprenant:
des moyens pour générer une clé de chiffrement en utilisant un identificateur propre à l'utilisateur dudit terminal de communication mobile (1) mémorisé dans une carte (5) amovible en réponse à une commande de téléchargement ;
des moyens pour coder lesdites données de contenu avec ladite clé de chiffrement et mémoriser les données codées dans ladite mémoire externe (4) ;
des moyens pour générer une clé de chiffrement en utilisant l'identificateur mémorisé dans ladite carte (5) en réponse à une commande de reproduction de contenu ;
**caractérisé en ce qu'**il comprend en outre:
des moyens pour mémoriser un historique de connexion indiquant si, oui ou non, le terminal de communication mobile (1) se connecte audit réseau de communication ; et
des moyens pour décoder et reproduire lesdites données de contenu mémorisées dans ladite mémoire externe (4) en utilisant ladite clé de chiffrement conformément audit historique de connexion en réponse à ladite commande de reproduction de contenu.

4. Programme comportant des moyens formant code pour amener un ordinateur, lorsqu'il exécute ledit programme, à effectuer les étapes du procédé selon la revendication 2.
